(19) **Europäisches Patentamt**

**European Patent Office**

**Office européen des brevets**

(11) Veröffentlichungsnummer: **0 330 985**
**A2**

## (12) EUROPÄISCHE PATENTANMELDUNG

(21) Anmeldenummer: **89103060.3**

(22) Anmeldetag: **22.02.89**

(51) Int. Cl.⁴: **C09J 3/14 , C08F 283/10**

(30) Priorität: **02.03.88 DE 3806745**

(43) Veröffentlichungstag der Anmeldung:
**06.09.89 Patentblatt 89/36**

(84) Benannte Vertragsstaaten:
**AT BE CH DE ES FR GB IT LI NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Artiga González, René-Andrés, Dr.**
**Am Nettchesfeld 30**
**D-4000 Düsseldorf(DE)**
Erfinder: **Nicolaisen, Heinz-Christian**
**Ossietzkyring 4**
**D-3000 Hannover(DE)**
Erfinder: **Kammer, Lorhar**
**Geibelstrasse 102**
**D-3000 Hannover 1(DE)**

(54) **Lichtinduziert dunkelhärtende Klebstoffe.**

(57) Lichtinduziert dunkelhärtende Klebstoffe, enthaltend bifunktionelle und mindestens trifunktionelle Epoxidverbindungen, Photoinitiatoren und Acrylate bzw. Methacrylate der allgemeinen Formel (I)
$$CH_2 = C(R^1)\text{-}CO\text{-}(OC_mH_{2m})_n\text{-}OR^2 \quad (I)$$
in der $R^1$ Wasserstoff oder Methyl und $R^2$ ein eine kationisch spaltbare Oxacycloalkylgruppe aufweisender Kohlenwasserstoffrest ist, liefern ausgezeichnete Ergebnisse beim Verkleben nicht-transparenter Substrate.

**EP 0 330 985 A2**

## Lichtinduziert dunkelhärtende Klebstoffe

Die Erfindung betrifft lichtinduziert dunkelhärtende Klebstoffe. Die Klebstoffe der Erfindung sind zum Kleben nicht transparenter, z.B. metallischer Substrate geeignet und enthalten mehrfunktionelle Glycidylverbindungen sowie Acrylate bzw. Methacrylate, wobei die lichtinduzierte Photopolymerisation im Dunkeln unter gleichzeitiger radikalischer und kationischer Polymerisation der Monomeren abläuft.

Die lichtinduzierte kationische Polymerisation von Epoxiden ist seit lamgem bekannt, vgl. J. Crivello, "Advances in Polymer Science" 62, 3 (1984). In dieser Druckschrift werden als geeignete Photoinitiatoren, d.h. Verbindungen, die nach Bestrahlung mit Licht Protonen freisetzen und dadurch die Polymerisation von Epoxiden initiieren, organische Sulfonium- bzw. Jodoniumsalze genannt.

Jodoniumsalze als Bestandteile photopolymerisierbarer Zusammensetzungen mit säurepolymerisierbaren bzw. säurehärtbaren Materialien werden auch in der DE-OS 26 02 574 beschrieben. Die in dieser Veröffentlichung beschriebenen Kleberzusammensetzungen sind auch als Klebstoffe für solche Substrate anwendbar, die "in situ" bestrahlt werden können, z.B. bei der Bildung von Schichtkörpern oder Laminaten, bei denen eine Lage oder Schicht oder beide strahlungsdurchlässig sind. Die Verklebung ist jedoch nur bei solchen Substraten vollständig möglich, bei denen mindestens ein Substrat durchlässig für die für die Polymerisationsreaktion erforderliche Strahlung ist. Dies ist ein wesentlicher Nachteil der dort beschriebenen, im übrigen durchaus brauchbaren Klebstoffe.

Aromatische Substituenten enthaltende Sulfoniumsalze, die als Photoinitiatoren zur Polymerisation von epoxidischen Monomeren geeignet sind, sind in der DE-OS 29 04 450 und der US-PS 4 173 476 beschrieben. Die dort beschriebenen Systeme weisen jedoch so niedrige Viskositäten auf, daß sie kaum als Klebstoffe eingesetzt werden können. Zudem läuft die einmal initiierte Vernetzungsreaktion mit so hoher Geschwindigkeit ab, daß die beschichteten Werkstoffe nicht mehr sicher an den gewünschten Stellen fixiert werden können.

Oniumsalze können als Photoinitiatoren für die radikalische Polymerisation von Vinylpolymeren dienen, vgl. H.-J. Timpe, Makromol. Chem. Rapid Commun. 8, 353 (1987) sowie W.C. Perkins, J. Radiation Curing, January 1981, 16 und S. Petter Pappas, Radiation Curing, August 1981, 28. Die dort beschriebenen Klebstoffsysteme benötigen jedoch für die Durchpolymerisation eine ständige Bestrahlung, so daß sie nur als Beschichtungsmittel eingesetzt werden können.

Epoxidverbindungen enthaltende und mit Photoiniatoren polymerisierbare Systeme werden auch in EP-A 0 119 425 und EP-A 0 118 044 beschrieben. Die Festigkeiten der mit diesen Systemen erzielten Verklebungen sind mit Scherfestigkeiten unter 1 $N/mm^2$ jedoch schlecht. Dies kann darauf zurückgeführt werden, daß die ausgehärteten Klebstofffilme eine schlechte Affinität zu metallischen Oberflächen aufweisen.

Die Erfindung ist auf lichtinduziert dunkelhärtende Klebstoffe gerichtet, die bei nicht transparenten Substraten ausgezeichnete Festigkeiten der Verklebung ergeben. Diese Aufgabe wird durch Klebstoffe gelöst, die folgende Komponenten enthalten:

a) einen oder mehrere bifunktionelle Glycidylether eines gegebenenfalls modifizierten Diphenylolpropans mit Epoxidäquivalenten von 150 bis 300,

b) mindestens trifunktionelle Epoxidverbindungen, die aus der Gruppe der Glycidylether des Glycerins, Trimethylolpropans, Pentaerythrits sowie der Novolake ausgewählt sind,

c) einen oder mehrere bei Einwirkung von elektromagnetischer Strahlung Protonen freisetzende Photoinitiatoren und

d) Acrylate bzw. Methacrylate der allgemeinen Formel I

$$CH_2 = C(R^1)\text{-}CO\text{-}(OC_mH_{2m})_n\text{-}OR^2 \qquad (I)$$

in der $R^1$ Wasserstoff oder Methyl, $R^2$ ein eine kationisch spaltbare $C_2$-$C_5$-Oxacyloalkyl- bzw. $C_5$-Oxacylolalkenylfunktion aufweisender Kohlenwasserstoffrest mit bis zu 15 Kohlenstoffatomen, m die Zahlen 2 und/oder 3 und n die Zahlen 0, 1 oder 2 bedeuten,
sowie gegebenenfalls

e) Photosensibilisatoren, Pigmente und/oder andere übliche Hilfsstoffe.

Die in den Klebstoffen der Erfindung enthaltenen bifunktionellen Glycidylether eines gegebenenfalls modifizierten Diphenylolpropans mit Epoxidäquivalenten von 150 bis 300 sind als flüssige Komponenten im Handel erhältlich und im übrigen z.B. in "Ullmanns Encyclopedia of Industrial Chemistry", Vol. A1, pp. 230 bis 241, VCH-Verlagsgesellschaft, Weinheim (1985) beschrieben.

Unter Epoxidäquivalentgewicht wird hier und im folgenden diejenige Menge an Epoxidharz (in g) bezeichnet, die ein Äquivalent an Epoxidgruppen enthält. Ein Epoxidäquivalentgewicht von 170 bedeutet z.B., daß 170 g eines Epoxidgruppen enthaltenden Harzes ein Äquivalent derartiger epoxidischer Gruppen enthält.

Die in den Klebstoffen der Erfindung enthaltenen trifunktionellen Epoxidverbindungen aus der Gruppe der Glycidylether des Glycerins, Trimethylolpropans, Pentaerythrits sowie der Novolake sind ebenfalls handelsübliche Verbindungen. Sie ermöglichen bei der Photopolymerisation einen raschen Aufbau eines dreidimensionalen Netzwerks.

Die in den Klebstoffen der Erfindung enthaltenen, bei Einwirkung von elektromagnetischer Strahlung Protonen freisetzenden Photoinitiatoren sind als solche bekannt und teilweise im Handel erhältlich. Unter "elektromagnetischer Strahlung" ist hierbei der gesamte Wellenlängenbereich zu verstehen, in dem sich üblicherweise die zur Initiation einer Photopolymerisation praktisch einsetzbare elektromagnetische Strahlung bewegen kann; dieser Bereich liegt üblicherweise zwischen 200 und 700 mm. Bevorzugt werden Photoinitiatoren, die im Wellenlängenbereich von 200 bis 600 mm anregbar sind.

In der Praxis haben sich als Photoinitiator-Komponente der Klebstoffe der Erfindung Verbindungen aus der Gruppe der Triarylsulfoniumsalze der allgemeinen Formel (IV)

$$[Ar^1(R^1)][Ar^2(R^2)][(Ar^3(R^3)] \overset{+}{S} X^- \quad (IV)$$

oder der Diaryljodoniumsalze der allgemeinen Formel (V)

$$(Ar^1)(Ar^2)\overset{+}{J} X^- \quad (V)$$

bewährt. In den allgemeinen Formel (IV) und (V) bedeutet Ar eine Aryl-, insbesondere Phenylgruppe.

In der allgemeinen Formel (IV) sind die Reste $R^1$, $R^2$ und $R^3$ gleich oder verschieden und stehen unabhängig voneinander für Wasserstoff, eine Nitrogruppe, ein Halogenatom, Oxalkyl-oder Thioalkylgruppen mit 1 bis 6 C-Atomen im geradkettigen oder verzweigten Alkylrest, substituierte oder unsubstituierte Phenoxygruppen mit 1 bis 3 Substituenten im Phenylrest oder Alkanoyl- oder Alkanolyamidoreste mit 1 bis 5 C-Atomen im Alkylrest der zugehörigen Carbonsäure. Außerdem ist es möglich, daß jeweils zwei der Reste $R^1$ und $R^2$ oder $R^2$ und $R^3$ als Methylengruppe, i-Propylengruppe oder Carbonylgruppe eine Brücke zwischen zwei benachbarten Phenylresten bilden und damit diese beiden Phenylreste zu einem heterocyclischen Ringsystem des Thioxanthens unter Bildung von Thioxantheniumionen verbinden. Weiterhin steht in der allgemeinen Formel (IV) $X^-$ für ein halogenhaltiges komplexes Anion. Bevorzugte Ausführungsformen der Erfindung betreffen Klebstoffe, in denen Photoinitiatoren aus der Gruppe solcher Ionen-Verbindungen gewählt werden, die der allgemeinen Formel (IV) entsprechen und in denen $X^-$ für komplexe Anionen aus der Gruppe Perchlorat, Tetrafluoroborat (III), Hexachloroantimonat (V), Hexafluoroantimonat (V), Hexachlorostannat (IV), Hexafluorophosphat, Hexafluoroarsenat (V), Tetrachloroferrat (III) und Pentachlorobismutat (III) steht.

In der allgemeinen Formel (V), die für erfindungsgemäß ebenfalls verwendbare Jodoniumsalze steht, haben die Reste $R^1$ und $R^2$, die gleich oder verschieden sein können, die gleiche Bedeutung, wie sie oben für die Verbindungen der allgemeinen Formel (IV) angegeben wurde. $R^1$ und $R^2$ können also unabhängig voneinander für Wasserstoff, Nitrogruppen, Halogenatome, Oxalkyl- oder Thioalkylgruppen mit 1 bis 6 C-Atomen im geradkettigen oder verzweigten Alkylrest, substituierte oder unsubstituierte Phenoxygruppen mit 1 bis 3 Substituenten am Phenylrest oder Alkanoyloxy- oder Alkanoylamidoreste mit 1 bis 5 C-Atomen im Alkylrest der zugehörigen Carbonsäure stehen. In der angegebenen allgemeinen Formel (V) bedeutet das Anion $X^-$ - wie auch oben für die Verbindungen der allgemeinen Formel (IV) angegeben - ein halogenhaltiges komplexes Anion, das in bevorzugten Ausführungsformen der Erfindung beispeilsweise für Perchlorat, Tetrafluoroborat (III), Hexachloroantimonat (V), Hexafluoroantimonat (V), Hexachlorostannat (IV), Hexafluorophosphat, Hexafluoroarsenat (V), Tetrachloroferrat (III) oder Pentachlorobismutat (III) stehen kann.

Die oben definierten Reste $R^1$, $R^2$ und $R^3$ in den allgemeinen Formeln (IV) und (V) können - wie angegeben - beispielsweise Oxalkyl- oder Thioalkylgruppen mit 1 bis 6 C-Atomen im geradkettigen oder verzweigten Alkylrest sein. Als Alkylreste der Oxalkyl- oder Thioalkylgruppen kommen somit Methyl, Ethyl, n-Propyl, n-Butyl, n-Pentyl oder n-Hexyl sowie die verzweigten Isomeren der genannten geradkettigen Alkylreste in Frage. Die Alkanoyloxy- oder Alkanoylamidoreste mit 1 bis 5 C-Atomen im Alkylrest der zugehörigen Carbonsäure können in bevorzugten Ausführungsformen der Erfindung von Essigsäure, Propionsäure, Buttersäure, Valeriansäure oder Caprylsäure abgeleitet sein. $R^1$, $R^2$ oder $R^3$ können also unabhängig voneinander Acetoyloxy-, Propionyloxy-, Butyryloxy-, Valeroyloxy- oder Caproyloxyreste oder die entsprechenden Amidoreste der genannten Carbonsäuren bedeuten. $R^1$, $R^2$ und $R^3$ können unabhängig voneinander auch substituierte oder unsubstituierte Phenoxygruppen bedeuten, wobei - in Falle der Substitution - ein Phenoxyrest 1 bis 3 Substituenten tragen kann. Als solche Substituenten kommen in erster Linie Nitro-, Halogen- oder Alkylsubstituenten mit 1 bis 6 C- Atomen in Frage, wobei diese vorzugsweise aus der Gruppe Methyl, Ethyl, n-Propyl, n-Butyl, n-Pentyl und n-Hexyl sowie deren verzweigtkettigen Isomeren ausgewählt sind.

Besonders bevorzugte Photoinitiatoren sind aus der folgenden Gruppe von Verbindungen der allgemeinen Formeln (IV) und (V) ausgewählt:
Triphenylsulfoniumtetrafluorborat,
Triphenylsulfoniumhexafluorphosphat,
Triphenylsulfoniumhexafluorantimonat,
Tritoluylsulfoniumhexafluorphosphat,
Anisyldiphenylsulfoniumhexafluorantimonat,

4-Butoxyphenyldiphenylsulfoniumtetraflourborat,
4-Chlorphenyldiphenylsulfoniumtetrafluorborat,
4-Chlorphenyldiphenylsulfoniumhexafluorantimonat,
tris-(4-Phenoxyphenyl-)sulfoniumhexafluorphosphat,
4-Acetoxyphenyldiphenylsulfoniumtetrafluorborat,
tris-(4-Thiomethoxyphenyl-)sulfoniumhexafluorborat,
4-Acetaminophenyldiphenylsulfoniumtetrafluorborat,
10-Phenylthioxantheniumhexafluorphosphat,
10-Phenyl-9,9-
dimethylthioxantheniumhexafluorphosphat,
10-Phenyl-9-oxothioxantheniumtetrafluorborat.

Die in den Klebstoffen der Erfindung enthaltenen Acrylate bzw. Methacrylate der allgemeinen Formel (I) sind als solche bekannt und größtenteils handelsübliche Verbindungen, die sich formal von Acrylsäure bzw. Methacrylsäure ableiten und - gegebenenfalls über eine Ethylenoxy- und/oder Propylenoxy-Funktion - mit einem Alkohol $R^2$OH verestert sind. Die Gruppe $R^2$ ist oder enthält eine Oxacycloalkyl-bzw. Oxacycloalkenyl-Funktion, die bei Einwirkung von Protonen über eine Ringöffnungsreaktion mit den mehrfunktionellen Epoxidverbindungen des Klebstoffsystems der Erfindung reagiert.

Besonders bevorzugt sind Acrylate bzw. Methacrylate der allgemeinen Formel (I), in denen der Rest $R^2$ die allgemeine Formel (II)

-CH$_2$-R$^3$   (II)

aufweist, wobei $R^3$ einen $C_2$-$C_5$-Oxacylcoalkylring oder einen $C_5$-Oxacycloalkenylring bedeutet und n = 0 ist. Die Gruppe $R^3$ ist dabei insbesondere ein Oxiran-, Tetrahydrofuran-, Dihydropyran- oder Tetrahydropyranring.

Gemäß einer weiteren vorteilhaften Ausführungsform der Erfindung kann der Rest $R^2$ der Acrylate bzw. Methacrylate der allgemeinen Formel (I) die allgemeine Formel (III)

-C$_6$H$_4$(R$^4$)-O-Glycidyl   (III)

aufweisen, in der die Gruppe $R^4$ Wasserstoff oder Vinyl bedeutet. Derartige Verbindungen der Formel (I) sind formal Ester der Acryl- bzw. Methacrylsäure mit gegebenenfalls vinylsubstituierten difunktionellen Phenolen, wobei eine OH-Funktion der difunktionellen Phenole mit Epichlorhydrin umgesetzt ist. Auch hier kann sich zwischen der Acryl- bzw. Methacrylsäurefunktion und der Alkoxyfunktion $R^2$O- eine Ethylenoxy- und/oder Propylenoxyfunktion befinden (m = 2 und/oder 3; n = 1 oder 2); bevorzugt ist jedoch n = 0.

Gemäß einer weiteren vorteilhaften Ausführungsform der Erfindung kann der Rest $R^2$ der Formel (I) ein eine Epoxidfunktion aufweisender Cycloalkyl- oder Bicycloalkylrest mit 5 bis 10 Kohlenstoffatomen sein. Ein typisches Beispiel hierfür ist ein Rest $R^2$, der sich formal von einem Diepoxid des Dicyclopentadiens ableitet, wobei eine Epoxidfunktion des Diepoxids unter Ringöffnung mit Ethylenoxid umgesetzt ist. Das dabei erhaltene Hydroxyethyloxy-substituierte Epoxid des Dicyclopentadiens ist mit Acrylsäure bzw. Methacrylsäure verestert. Besonders bevorzugt sind somit Acrylate bzw. Methacrylate der Formel (I), in denen $R^1$ eine Methylgruppe, $R^2$ eine Epoxidotetrahydro-dicyclopentadienylgruppe sowie m = 1 und n = 1 oder m = 1 und n = 0 bedeuten. Diese Verbindungen sind im Handel erhältlich.

Gemäß einer weiteren vorteilhaften Ausführungsform der Erfindung bedeuten in der allgemeinen Formel (I) $R^1$ eine Methylgruppe, $R^2$ eine Glycidyl-, Tetrahydrofuranylmethyl-, Dihydropyranylmethyl-, Tetrahydropyranylmethyl- oder Glycidoxyl-substituierte Styrylgruppe. Auch diese Verbindungen sind im Handel erhältlich.

Die Klebstoffe der Erfindung können gegebenenfalls Photosensibilisatoren, Pigmente und/oder andere, dem Fachmann auf dem Gebiet der Klebetechnik geläufige übliche Hilfsstoffe, insbesondere Füllstoffe und dergleichen, enthalten.

Als gegebenenfalls zuzusetzende Photosensibilisatoren werden solche eingesetzt, die üblicherweise für den sichtbaren Bereich des elektromagnetischen Spektrums verwendet werden, insbesondere Acridine, Perylene und Benzoflavine. Typische Beispiele sind Acridin-orange, Acridin-gelb, Benzoflavin, Setoflavin T, Phosphin R und Perylen.

Gemäß einer weiteren vorteilhaften Ausführungsform der Erfindung enthalten die Klebstoffe bifunktionelle Glycidylether eines gegebenenfalls modifizierten Diphenylolpropans mit Epoxidäquivalenten von 150 bis 300 und mindestens trifunktionelle Epoxidverbindungen im molaren Verhältnissen, so daß auf 4 bis 20 Epoxidgruppen der Diphenylolpropan-glycidylether eine Epoxidgruppe der mindestens trifunktionelle Epoxidverbindungen vorhanden ist. Besonders bevorzugt sind Klebstoffe der Erfindung, die auf 2 bis 8 Gew.-Teile der bifunktionellen Biphenylolpropanglycedylether 0,7 bis 1 Gew.-Teile der Acrylate bzw. Methacrylate der Formel (I) enthalten.

Schließlich ist auch möglich, daß bis zu 20 Gew.-% der Acrylate bzw. Methacrylate der Formel (I) durch Ester der Acryl- bzw. Methacrylsäure mit $C_1$-$C_6$-Monoalkanolen oder $C_2$-$C_5$-Polyalkanolen mit 2 bis 4 Hydroxylgruppen ersetzt sind. Typische Beispiele für diese Ester der Acryl- bzw. Methacrylsäure sind Triethylenglycol-dimethacrylat, Trimethylolpropan-trimethacrylat, Hexylmethacrylat, Methylacrylat, Methylmethacrylat, Ethylacrylat, Ethylmethacrylat, Butylacrylat, Butylmethacrylat, Hexylmethacrylat und dergleichen.

In der praktischen Anwendung der Klebstoffe der Erfindung wird so verfahren, daß die Klebstoffgemische auf die zu verklebenden Substratflächen aufgetragen werden, bevorzugt auf beide zu verklebende Flächen. Dies geschieht üblicherweise dadurch, daß die viskose Klebstoffmasse auf die wie üblich vorbereiteten Substrate manuell mit einem Spatel oder mit Hilfe eines automatischen Auftragssystems aufgetragen wird; die Schichtdicke der Klebemischung auf den Substratflächen liegt üblicherweise im Bereich zwischen 0,5 und 3 mm.

Die mit Klebstoff versehenen Substratflächen werden anschließend bestrahlt. Diese Strahlung kann ultraviolette Strahlung sein. Es ist jedoch auch möglich, die Polymerisation durch Bestrahlung aus dem elektromagnetischen Spektrum zu initiieren, die sowohl sichtbare als auch ultraviolette Anteile enthält. Dabei kann sowohl Sonnenlicht als Strahlungsquelle als auch irgendeine andere spezielle Strahlungsquelle eingesetzt werden, die nur Licht innerhalb eines sehr engen Bereichs des elektromagnetischen Spektrums aufweist.

Ein wesentlicher Schritt des Einsatzes der Klebstoffe der Erfindung ist darin zu sehen, daß man die Polymerisation der Klebemischung im Verlauf der Bestrahlung bis kurz vor den Gelpunkt des Polymeren führt, ohne die mit der Klebemischung versehenen Substratflächen zusammenzufügen. Für den Erfolg des Klebevorgangs ist es somit von Bedeutung, daß die Zeit bestimmt wird, in der an der Oberfläche des aufgetragenen Klebstoffes der Gelpunkt erreicht wird. Üblicherweise geschieht diese Gelpunktbestimmung unter den gleichen Bedingungen, unter denen auch der Klebevorgang erfolgt. Zweckmäßigerweise wird der Gelpunkt in einem dem eigentlichen Klebevorgang vorgelagerten, separaten Bestimmungsschritt für eine Klebemischung einer bestimmten Zusammensetzung bestimmt. Dies geschieht dadurch, daß man auf die zu verklebenden Substratflächen eine Klebstoffschicht aufträgt und - beginnend mit dem Zeitpunkt des Auftrags - die Zeit bestimmt, innerhalb derer die Klebstoffschicht beim Berühren mit einem Holzspatel noch "Fäden" des Polymeren zieht, das Polymere also noch fließen kann. Der Gelpunkt des Polymeren ist dann erreicht, wenn die Oberfläche der Klebstoffschicht beim Berühren mit dem Spatel keine Fäden mehr zieht, also nicht mehr fließt.

Die seit dem Zeitpunkt des Auftrags der Klebemischung auf die Substrate vergangene Zeit ist dann diejenige Zeit, innerhalb der der Gelpunkt des jeweiligen Polymeren erreicht wird. Die zu verklebenden und mit Klebemischung beaufschlagten Substratflächen müssen kurz vor Erreichung des Gelpunktes, also möglichst knapp vor der vorher bestimmten Zeit, vereinigt werden; werden die Klebeflächen zu früh vereinigt, kann die Polymerisation in der Klebefuge zum Stillstand kommen. Werden die mit Klebemischung beaufschlagten Substratflächen erst nach Erreichen des Klebepunktes vereinigt, können die mit Klebemischung beschichteten Substrate meist nicht mehr verklebt werden, da die Polymerisation schon zum Abschluß gekommen ist. Werden dagegen die mit Klebemischung beaufschlagten Substratflächen kurz vor Erreichung des Gelpunktes vereinigt, lassen sich mit dem Verfahren der Erfindung zum Kleben fester Substrate optimale Klebeergebnisse erzielen. Die erhaltenen Zugscherfestigkeiten liegen - insbesondere für metallische Substrate - im Bereich bis zu 25 $N.mm^{-2}$. Damit weisen sie eine deutlich höhere Festigkeit auf, als sie mit bisher bekannten Verfahren zum Kleben fester Substrate erreichbar waren. Der besondere Vorteil der Klebstoffe der Erfindung liegt darin begründet, daß bei einer Vereinigung der mit der Klebemischung beaufschlagten Substratflächen kurz vor Erreichen des Gelpunktes die verklebende Polymermischung aushärtet, ohne daß sie weiter bestrahlt werden muß. Es ist daher möglich, die Polymerisation auch z.B. im Dunkeln einer Klebefuge zu beenden.

Ein weiterer Vorteil der Klebstoffe der Erfindung ist darin zu sehen, daß sie sogenannte "Ein-Komponenten-Systeme" darstellen. Dies bringt anwendungstechnische Vorteile, da der Anwender z.B. nicht mehr unterschiedliche Komponenten der Klebemischung kurz vor dem Klebeverfahren miteinander vermischen muß. Die Klebstoffe der Erfindung sind lagerfähig und bedürfen nicht des Zusatzes irgendwelcher Verdickungsmittel, die häufig die Klebeeigenschaften beeinträchtigen.

Die Erfindung wird im folgenden anhand von bevorzugten Ausführungsbeispielen näher erläutert.

Beispiel 1.

Es wurde eine Klebemischung aus den folgenden Komponenten:

a) 160 g handelsüblichem Epoxidharz mit einem Epoxidäquivalent von 190 (modifizierter Glycidylether des Diphenylolpropans),

b) 40 g handelsüblichem Epoxidharz mit einem Epoxidäquivalent von 255 (Oligomeres des Bisphenol-A-diglycidylethers),

c) 12 g Pentaerythrit-tetraglycidylether,

d) 8 g handelsüblichem Triarylsulfonium-hexafluorantimonat und

e) 30 g Tetrahydrofurfuryl-methacrylat

bei Tageslicht, jedoch unter Ausschluß von UV-Licht durch Mischen der Einzelkomponenten in einem Mischer hergestellt. Die so erhaltene Klebemischung wurde in 2 mm dicker Schicht auf ein Eisenblech aufgetragen und mit einer handelsüblichen UVA-Lampe (Fa. Heraeus, UVA-92 $mW/cm^2$) in einem Abstand von 20 cm bestrahlt. Es wurde die Zeit ermittelt, innerhalb der vom Zeitpunkt der ersten Bestrahlung an die Klebeschicht beim Berühren mit einem Holzspatel noch Fäden zog, d.h. noch fließfähig war. Diese Zeitspanne ( = Gelpunkt) war nach 7 Sekunden erreicht. Nach Bestimmung des Gelpunktes wurde ein anderer Teil der Klebemischung auf entfettete und sandgestrahlte Eisenbleche mit den Abmessungen 10 cm x 2,5 cm x 0,5 cm aufgetragen; die Klebstoffauftragsfläche betrug 2,5 cm². Die mit der Klebemischung versehenen Eisenbleche wurden 6 sec, d.h. bis kurz vor Erreichen des Gelpunktes, bestrahlt. Jeweils 2 Eisenbleche wurden mit den mit Klebstoff versehenen Flächen aufeinandergelegt und unter leichtem Druck (etwa 1 N/cm²) 24 Stunden lang bei 22°C gelagert. Die Zugscherfestigkeiten wurden entsprechend den DIN-Normen 53 281 und 53 283 nach 24 Stunden ermittelt.

Der Gelpunkt der Klebemischung betrug 7 sec, die Zugscherfestigkeit 23,0 MPa.

Zu Vergleichszwecken wurde die oben genannte Mischung ohne Zusatz an Tetrahydrofurfurylmethacrylat hergestellt; der Gelpunkt dieser Mischung betrug 10 sec, die Zugscherfestigkeit 10,2 MPa.

Beispiel 2.

In der in Beispiel 1 beschriebenen Weise wurde eine Klebemischung aus

a) 60 g handelsüblichem Epoxidharz mit einem Epoxidäquivalent von 190 (modifizierter Glycidylether des Diphenylolpropans),

b) 15 g handelsüblichem Epoxidharz mit einem Epoxidäquivalent von 255 (Oligomeres des Bisphenol-A-diglycidylethers),

c) 9 g Trimethylolpropan-triglycidylether,

d) 3,7 g handelsüblichem Triarylsulfoniumhexafluorantimonat

e) 12 g Tetrahydrofurfuryl-methacrylat
hergestellt.

Der Gelpunkt dieses Gemisches betrug 25 sec, die Zugscherfestigkeit 20,3 MPa.

Zu Vergleichszwecken wurde ein Gemisch der obigen Zusammensetzungen, jedoch ohne Zusatz von Tetrahydrofurfuryl-methacrylat hergestellt. Der Gelpunkt dieses Gemisches betrug 10 sec, die Zugscherfestigkeit 12,1 MPa.

Beispiel 3.

Wie in Beispiel 1 beschrieben wurde eine Klebemischung aus

a) 80 g handelsüblichem Epoxidharz mit einem Epoxidäquivalent von 190 (modifizierter Glycidylether des Diphenylolpropans),

b) 20 g handelsüblichem Epoxidharz mit einem Epoxidäquivalent von 255 (Oligomeres des Bisphenol-A-diglycidylethers),

c) 8 g Trimethylolpropan-triglycidylether,

e) 12 g Methacryloyloxy-methyl-dihydropyran
hergestellt.

Der Gelpunkt der Mischung betrug 7 sec, die Zugscherfestigkeit 17,5 MPa.

## Ansprüche

1. Lichtinduziert dunkelhärtende Klebstoffe, enthaltend

a) einen oder mehrere bifunktionelle Glycidylether eines gegebenenfalls modifizierten Diphenylolpropans mit Epoxidäquivalenten von 150 bis 300,

b) mindestens trifunktionelle Epoxidverbindungen, die aus der Gruppe der Glycidylether des Glycerins, Trimethylolpropans, Pentaerythrits sowie der Novolake ausgewählt sind,

c) einen oder mehrere bei Einwirkung von elektromagnetischer Strahlung Protonen freisetzende Photoinitiatoren und

d) Acrylate bzw. Methacrylate der allgemeinen Formel I
$$CH_2 = C(R^1)\text{-}CO\text{-}(OC_mH_{2m})_n\text{-}OR^2 \qquad (I)$$
in der $R^1$ Wasserstoff oder Methyl, $R^2$ ein eine kationisch spaltbare $C_2$-$C_5$-Oxacycloalkyl- bzw. $C_5$-Oxacycloalkenylfunktion aufweisender Kohlenwasserstoffrest mit bis zu 15 Kohlenstoffatomen, $m$ die Zahlen 2 und/oder 3 und $n$ die Zahlen 0, 1 oder 2 bedeuten,
sowie gegebenenfalls

e) Photosensibilisatoren, Pigmente und/oder andere übliche Hilfsstoffe.

2. Lichtinduziert dunkelhärtende Klebstoffe nach Anspruch 1, dadurch gekennzeichnet, daß der Rest $R^2$ der Formel (I) die allgemeine Formel (II)
$$\text{-}CH_2\text{-}R^3 \qquad (II)$$
aufweist, in der $R^3$ einen $C_2$-$C_5$-Oxacycloalkylring oder einen $C_5$-Oxacycloalkenylring bedeutet und $n$ = 0 ist.

3. Lichtinduziert dunkelhärtende Klebstoffe nach Anspruch 1, dadurch gekennzeichnet, daß der Rest $R^2$ der Formel (I) die allgemeine Formel (III)
$$\text{-}C_6H_4(R^4)\text{-}O\text{-}Glycidyl \qquad (III)$$
aufweist, in der $R^4$ Wasserstoff oder Vinyl bedeutet.

4. Lichtinduziert dunkelhärtende Klebstoffe nach Anspruch 1, dadurch gekennzeichnet, daß der Rest $R^2$ der Formel (I) ein eine Epoxidfunktion aufweisender Cycloalkyl- oder Bicycloalkylrest mit 5 bis 10 Kohlenstoffatomen ist.

5. Lichtinduziert dunkelhärtende Klebstoffe nach Anspruch 1, dadurch gekennzeichnet, daß in der allgemeinen Formel (I) $R^1$ eine Methylgruppe, $R^2$ eine Glycidyl-, Tetrahydrofuranylmethyl-,

Dihydropyranylmethyl-, Tetrahydropyranylmethyl- oder glycidoxy-substituierte Styrylgruppe und n = 0 bedeuten.

6. Lichtinduziert dunkelhärtende Klebstoffe nach Anspruch 1, dadurch gekennzeichnet, daß in der allgemeinen Formel I $R^1$ eine Methylgruppe, $R^2$ eine Epoxido-tetrahydro-dicyclopentadienylgruppe sowie m = 1 und n = 1 oder m = 1 und n = 0 bedeuten.

7. Lichtinduziert dunkelhärtende Klebstoffe nach mindestens einem der Ansprüche 1 bis 6, dadurch gekennzeichnet, daß sie bifunktionelle Glycidylether eines gegebenenfalls modifizierten Diphenylolpropans mit Epoxidäquivalenten von 150 bis 300 und mindestens trifunktionelle Epoxidverbindungen in molaren Verhältnissen enthalten, so daß auf 4 bis 20 Epoxidgruppen der Diphenylolpropan-glycidylether eine Epoxidgruppe der mindestens trifunktionellen Epoxidverbindungen vorhanden ist.

8. Lichtinduziert dunkelhärtende Klebstoffe nach mindestens einem der Ansprüche 1 bis 7, dadurch gekennzeichnet, daß sie auf 2 bis 8 Gew.-Teile der bifunktionellen Diphenylolpropan-glycidylether 0,7 bis 1 Gew.-Teile der Acrylate bzw. Methacrylate der Formel I enthalten.

9. Lichtinduziert dunkelhärtende Klebstoffe nach mindestens einem der Ansprüche 1 bis 8, dadurch gekennzeichnet, daß bis 20 Gew.-% der Acrylate bzw. Methacrylate der Formel I durch Ester der Acryl- bzw. Methacrylsäure mit $C_1$-$C_6$-Monoalkanolen oder $C_2$-$C_5$-Polyalkanolen mit 2 bis 4 Hydroxylgruppen ersetzt sind.

10. Verfahren zum Herstellen von Verklebungen zwischen Werkstoffen, dadurch gekennzeichnet, daß man auf mindestens eine der Oberflächen eine zur Benetzung hinreichende Menge einer Mischung enthaltend

a) einen oder mehrere bifunktionelle Glycidylether eines gegebenenfalls modifizierten Diphenylolpropans mit Epoxidäquivalenten von 150 bis 300,

b) mindestens trifunktionelle Epoxidverbindungen, die aus der Gruppe der Glycidylether des Glycerins, Trimethylolpropans, Pentaerythrits sowie der Novolake ausgewählt sind,

c) einen oder mehrere bei Einwirkung von elektromagnetischer Strahlung Protonen freisetzende Photoinitiatoren und

d) Acrylate bzw. Methacrylate der allgemeinen Formel I

$$CH_2 = C(R^1)\text{-}CO\text{-}(OC_mH_{2m})_n\text{-}OR^2 \qquad (I)$$

in der $R^1$ Wasserstoff oder Methyl, $R^2$ ein eine kationisch spaltbare $C_2$-$C_5$-Oxacycloalkyl- bzw. $C_5$-Oxacycloalkenylfunktion aufweisender Kohlenwasserstoffrest mit bis zu 15 Kohlenstoffatomen, m die Zahlen 2 und/oder 3 und n die Zahlen 0, 1 oder 2 bedeuten,

aufbringt und einer die Polymerisation auslösenden elektromagnetischen Strahlung aussetzt sowie anschließend mit der zweiten Oberfläche vereinigt und das Verbundteil solange fixiert, bis ein fester, die Handhabung erlaubender Verbund eingetreten ist.

11. Verfahren nach Anspruch 10, dadurch gekennzeichnet, daß man zur Auslösung der Polymerisation ultraviolette Strahlung oder Sonnenlicht einsetzt.